# EUROPEAN PATENT APPLICATION

(11) **EP 4 243 236 A1**
(43) Date of publication of application: **13.09.2023**
(21) Application number: 21889494.7
(22) Date of filing: 02.11.2021
(51) Int. Cl.: H02J 7/00

(54) **BATTERY DISCHARGE DEVICE AND DISCHARGE METHOD THEREOF**

(30) Priority: 03.11.2020 KR 20200145232; 01.11.2021 KR 20210147721
(71) Applicant: Maroo On Inc., Cheongju-si, Chungcheongbuk-do 28128 (KR)
(72) Inventor: HAN, Yeon Soo, Cheongju-si, Chungcheongbuk-do 28293 (KR); SHIN, Eun Sung, Hwaseong-si, Gyeonggi-do 18466 (KR)
(74) Representative: Nobbe, Matthias
(86) International application number: PCT/KR2021/015630
(87) International publication number: WO 2022/098029

(57) **Abstract**

Provided is a battery discharge apparatus, which includes a main control unit; a first discharge unit configured to discharge a battery from a discharge start voltage to a discharge completion voltage under control of the main control unit; a second discharge unit configured to discharge the battery from the discharge completion voltage to a reverse potential voltage under the control of the main control unit; and a short-circuit switch configured to short-circuit the battery under the control of the main control unit when a voltage of the battery is increased from the reverse potential voltage to become 0 V.

## Description

### [Technical Field]

The present invention relates to a battery discharge apparatus, and more particularly, to a battery discharge apparatus capable of discharging a battery to a reverse potential voltage of negative polarity that is less than a discharge completion voltage, and a discharging method thereof.

### [Background Art]

Generally, vehicles using an internal combustion engine that uses gasoline or heavy oil as main fuel have a serious impact on air pollution and the like. Accordingly, recently, in order to reduce pollution, a great amount of effort has been made to develop electric vehicles or hybrid vehicles.

In particular, electric vehicles are vehicles that use a battery engine operated by electric energy output from a battery, and electric vehicles use, as a main power source, a battery in which a plurality of battery cells capable of charging and discharging are formed as a single pack, and thus there is an advantage that there is no exhaust gas and very little noise.

A battery, which is a secondary battery or a storage battery, is discharged using a discharge apparatus for testing, reuse, or recycling.

For example, when a performance test of a battery with a problem is performed or a battery in use is reused for another device, the detached battery is discharged to a discharge termination voltage (a discharge cutoff voltage) and transported in a state of charge (SOC) of 0%.

In addition, when the battery whose life is completed is disassembled and materials thereof are recycled, the detached battery is discharged to a voltage that is less than the discharge termination voltage and transported in the state in which a total voltage is 0 V.

In this way, in order to secure electrical safety, the detached battery is discharged using a discharge apparatus.

In particular, batteries for the recycling of materials thereof are discharged by being immersed in salt water, and such salt water immersion discharge has a problem of poor workability, increased discharge time, and increased discharge costs due to additional equipment.

Meanwhile, even after the battery is discharged to a total voltage of 0 V, the voltage is increased again when the discharge apparatus is removed. In order to prevent such a phenomenon, a positive terminal and a negative terminal of the battery are short-circuited in the state in which the total voltage is 0 V.

However, even when a total series voltage of the battery is 0 V, some of a plurality of cells connected in series, of the battery, may be in a reverse potential state, and in this case, there is a problem that there is a risk of an accident caused by a short circuit between a positive terminal and a negative terminal.

### [Disclosure]

### [Technical Problem]

The present invention is directed to providing a battery discharge apparatus that discharges a battery to a discharge completion voltage using a first discharge unit and discharges the battery to a reverse potential voltage of negative polarity that is less than the discharge completion voltage using a second discharge unit, thereby improving stability, reducing discharge time and discharge costs, and improving convenience, and a discharging method thereof.

### [Technical Solution]

One aspect of the present invention provides a battery discharge apparatus which includes a main control unit; a first discharge unit configured to discharge a battery from a discharge start voltage to a discharge completion voltage under the control of the main control unit; a second discharge unit configured to discharge the battery from the discharge completion voltage to a reverse potential voltage under the control of the main control unit; and a short-circuit switch configured to short-circuit the battery under the control of the main control unit when a voltage of the battery is increased from the reverse potential voltage to become 0 V.

The first discharge unit may include a switching control unit connected to the battery; and a load resistor unit which is disposed to connect the switching control unit and the battery to provide different resistance values.

The switching control unit may include at least one insulated gate bipolar transistor (IGBT).

The load resistor unit may include a plurality of resistors having different resistance values and a plurality of switches each connected to both ends of at least corresponding one of the plurality of resistors.

The second discharge unit may include a phase control unit connected to the battery; a transformer having a second side connected to the phase control unit; and a switchboard connected to a first side of the transformer.

The phase control unit may include at least one silicon-controlled rectifier (SCR).

The at least one SCR may include four SCRs connected to each other in the form of a bridge circuit.

Another aspect of the present invention provides a method of discharging a battery, which includes discharging, by a first discharge unit, a battery from a discharge start voltage to a discharge completion voltage; discharging, by a second discharge unit, the battery from the discharge completion voltage to a reverse potential voltage; and short-circuiting, by a short-circuit switch, the battery when a voltage of the battery is increased from the reverse potential voltage to become 0 V.

The discharging, by the first discharge unit, of the battery may include causing a switching control unit of the first discharge unit to have an on state and causing a phase control unit of the second discharge unit to have an off state; and providing, by a load resistor unit of the first discharge unit, different resistance values, and the discharging, by the second discharge unit, of the battery may include causing the switching control unit of the first discharge unit to have the off state and causing the phase control unit of the second discharge unit to have the on state; and causing the phase control unit of the second discharge unit to have the off state when the battery becomes the reverse potential voltage.

The method of discharging the battery may further include, between the discharging, by the first discharge unit, of the battery and the discharging, by the second discharge unit, of the battery: operating the first and second discharge units together; and stopping the first discharge unit.

### [Advantageous Effects]

According to the present invention, by discharging a battery to a discharge completion voltage using a first discharge unit and discharging the battery to a reverse potential voltage of negative polarity that is less than the discharge completion voltage using a second discharge unit, stability can be improved, discharge time and discharge cost can be reduced, and convenience can be improved.

In particular, it is possible to completely discharge a battery to 0 V through reverse potential discharge, which was impossible with the existing discharge apparatus, and thus temporal and economic effects can be superior to the existing discharge method in which a battery is completely discharged by immersing the battery in salt water for recycling, and the problem of disposal of used salt water can be completely solved.

Further, when a battery is attached or detached in an electric vehicle for repair or replacement, the battery should be essentially discharged, and in this case, the battery can be discharged to a desired voltage with a constant current desired by a user, and thus performance of the battery can be checked. In addition, the battery can be discharged in order to determine whether the battery is reused, and can be additionally discharged for immediate disposal when the required performance is not met. The present invention can be identically applied to batteries of electric vehicles as well as batteries of energy storage devices and the like.

### [Description of Drawings]

FIG. 1 is a block diagram illustrating a battery discharge apparatus according to a first embodiment of the present invention.
FIG. 2 is a circuit diagram illustrating the battery discharge apparatus according to the first embodiment of the present invention.
FIGS. 3 to 5 are circuit diagrams for describing operations of the battery discharge apparatus according to the first embodiment of the present invention.
FIG. 6 is a flowchart for describing a discharging method of the battery discharge apparatus according to the first embodiment of the present invention.
FIG. 7 is a flowchart for describing a discharging method of a battery discharge apparatus according to a second embodiment of the present invention.

### [Modes of the Invention]

Hereinafter, the present invention will be described with reference to the accompanying drawings.

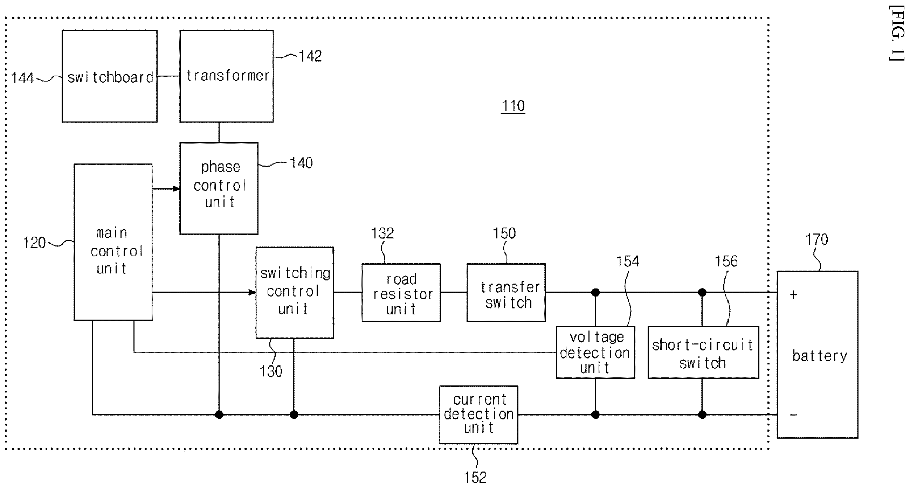

FIG. 1 is a block diagram illustrating a battery discharge apparatus according to a first embodiment of the present invention.

As illustrated in FIG. 1, a battery discharge apparatus 110 according to the first embodiment of the present invention includes a main control unit 120, a switching control unit 130, a load resistor unit 132, a phase control unit 140, a transformer 142, a switchboard 144, a transfer switch 150, a current detection unit 152, a voltage detection unit 154, and a short-circuit switch 156, wherein the switching control unit 130 and the load resistor unit 132 constitute a first discharge unit, and the phase control unit 140, the transformer 142 and the switchboard 144 constitute a second discharge unit.

Specifically, the main control unit 120 is connected to the voltage detection unit 154 and the current detection unit 152 to receive a detected voltage and current of a battery 170, and is connected to the switching control unit 130 and the phase control unit 140 to control the switching control unit 130 and the phase control unit 140 according to the detected voltage and current of the battery 170.

For example, when the detected voltage of the battery 170 is within a range between a discharge start voltage and a discharge completion voltage, the main control unit 120 may control the switching control unit 130 to be operated and the phase control unit 140 to stop operation thereof, and when the detected voltage of the battery 170 is within a range between the discharge completion voltage and a reverse potential voltage of negative polarity, the main control unit 120 may control the switching control unit 130 to stop operation thereof and the phase control unit 140 to be operated.

Here, the discharge completion voltage may be a voltage less than a discharge termination voltage, and the discharge termination voltage may be a voltage corresponding to a state in which a charge rate is 0%.

The switching control unit 130 is disposed to connect the load resistor unit 132 and the current detection unit 152 and controls a connection between the load resistor unit 132 and the current detection unit 152 under the control of the main control unit 120.

For example, when the detected voltage of the battery 170 is within the range between the discharge start voltage and the discharge completion voltage, the switching control unit 130 may control the load resistor unit 132 and the current detection unit 152 to be connected to each other.

The switching control unit 130 may include a large-capacity switching element such as an insulated gate bipolar transistor (IGBT).

The load resistor unit 132 is disposed to connect the switching control unit 130 and the transfer switch 150 and adjusts resistance values of load resistors under the control of the main control unit 120 so that the battery 170 is discharged in an optimal state.

For example, the load resistor unit 132 may have different resistance values according to a current and voltage of the battery 170.

The phase control unit 140 is connected to a positive terminal (+) of the battery 170 and the current detection unit 152 to control a connection between the positive terminal (+) of the battery 170 and the current detection unit 152 under the control of the main control unit 120.

For example, when the detected voltage of the battery 170 is within the range between the discharge completion voltage that is less than the discharge termination voltage and the reverse potential voltage of negative polarity, the phase control unit 140 may control the positive terminal (+) of the battery 170 and the current detection unit 152 to be connected to each other.

Here, the discharge completion voltage and the reverse potential voltage may be voltages having the same magnitude and opposite polarities, wherein the discharge start voltage may be about 500 V, the discharge termination voltage may be about 250 V, the discharge completion voltage may be about 10 V, and the reverse potential voltage may be about -10 V.

The phase control unit 140 may include a switching element such as a silicon-controlled rectifier (SCR).

The transformer 142 and the switchboard (power grid) 144 are sequentially connected to the phase control unit 140 and supply power to the phase control unit 140.

The transfer switch 150 is disposed to connect the load resistor unit 132 and the positive terminal (+) of the battery 170 and controls a connection between the load resistor unit 132 and the positive terminal (+) of the battery 170 under the control of the main control unit 120 to switch operations of the first and second discharge units.

For example, when the detected voltage of the battery 170 is within the range between the discharge start voltage and the discharge completion voltage, the transfer switch 150 may connect the switching control unit 130 and the load resistor unit 132 to the battery 170 so that the battery 170 is discharged by the first discharge unit or when the detected voltage of the battery 170 is within the range between the discharge completion voltage and the reverse potential voltage of negative polarity, the transfer switch 150 may separate the switching control unit 130 and the load resistor unit 132 from the battery 170 under the control of the main control unit 120 so that the battery 170 is additionally discharged by the second discharge unit.

The current detection unit 152 is connected to a negative terminal (-) of the battery 170 and detects a current of the battery 170, the voltage detection unit 154 is disposed to connect the positive terminal (+) and the negative terminal (-) of the battery 170 and detects a voltage of the battery 170, and the current detection unit 152 and the voltage detection unit 154 transmit the detected voltage and current of the battery 170 to the main control unit 120.

The short-circuit switch 156 is disposed to connect the positive terminal (+) and the negative terminal (-) of the battery 170 and controls a connection between the positive terminal (+) and the negative terminal (-) of the battery 170 under the control of the main control unit 120.

For example, the short-circuit switch 156 may open-circuit the positive terminal (+) and the negative terminal (-) of the battery 170 until the detected voltage of the battery 170 is reduced from the discharge start voltage to the reverse potential voltage through the discharge completion voltage and then increased again to become 0 V, and the short-circuit switch 156 may short-circuit the positive terminal (+) and the negative terminal (-) of the battery 170 when the detected voltage of the battery 170 is increased from the reverse potential voltage to become 0 V.

As described above, in the battery discharge apparatus 110 according to the first embodiment of the present invention, the battery 170 is discharged from the discharge start voltage to the discharge completion voltage through the discharge termination voltage by the first discharge unit including the switching control unit 130 and the load resistor unit 132, the battery 170 is additionally discharged from the discharge completion voltage to the reverse potential voltage by the second discharge unit including the phase control unit 140, the transformer 142, and the switchboard 144, and the positive terminal (+) and the negative terminal (-) of the battery 170 are short-circuited by the short-circuit switch 156 when the voltage of the battery 170 becomes 0 V.

Therefore, stability of the battery 170 can be improved, discharge time and discharge costs for the battery 170 can be reduced, and convenience of the discharging process of the battery 170 can be improved.

An exemplary circuit of the battery discharge apparatus 110 will be described with reference to the drawings.

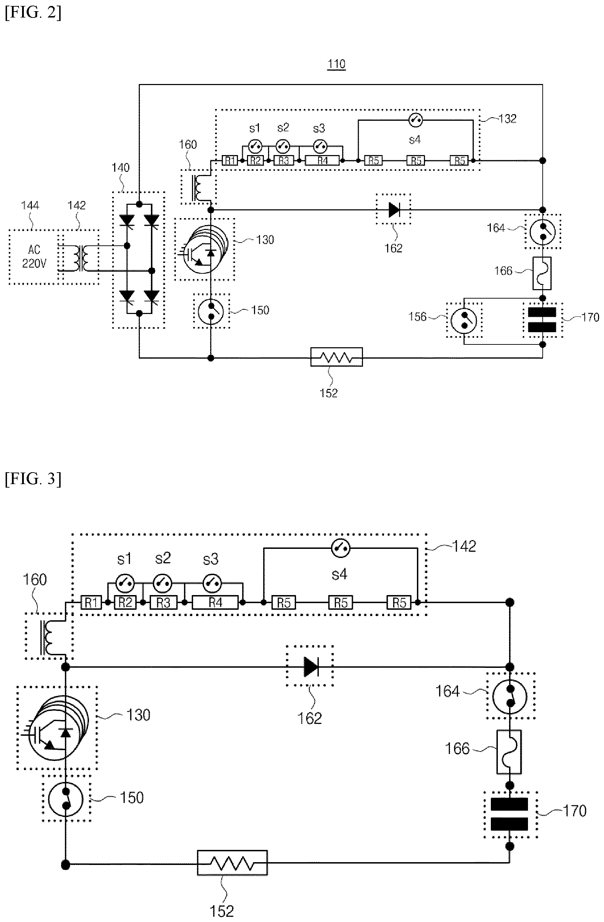

FIG. 2 is a circuit diagram illustrating the battery discharge apparatus according to the first embodiment of the present invention, and descriptions of the same parts as in FIG. 1 will be omitted.

As illustrated in FIG. 2, the battery discharge apparatus 110 according to the first embodiment of the present invention includes a switching control unit 130, a load resistor unit 132, a phase control unit 140, a transformer 142, a switchboard 144, a transfer switch 150, a current detection unit 152, a short-circuit switch 156, a reactor 160, a diode 162, a main relay 164, and a fuse 166.

The switching control unit 130 controls a connection between the load resistor unit 132 and a battery 170 using the transfer switch 150, the current detection unit 152, the main relay 164, and the fuse 166 under the control of a main control unit 120 (see FIG. 1).

For example, the switching control unit 130 may include a plurality of IGBTs connected in parallel to each other.

The load resistor unit 132 adjusts resistance values of load resistors connected to the battery 170 under the control of the main control unit 120.

For example, the load resistor unit 132 may include first to fifth resistors R1 to R5 that are connected in series or parallel and have different resistance values, and first to fourth switches s1 to s4 that are connected to both ends of the first to fifth resistors R1 to R5.

The first to fourth resistors R1 to R4 and three fifth resistors R5 may be sequentially connected in series to the transfer switch 150, the first to third switches s1 to s3 may be connected to both ends of the second to fourth resistors R2 to R4, respectively, and the fourth switch s4 may be connected to both ends of the three fifth resistors R5.

The load resistor unit 132 may implement various resistance values according to on/off of the first to fourth switches s1 to s4 under the control of the main control unit 120.

For example, when the first to fourth switches s1 to s4 are on, off, on, and off, respectively, the load resistor unit 132 may have a resistance value of "R1+R3+3R5," and when the first to fourth switches s1 to s4 are on, on, off, and on, respectively, the load resistor unit 132 may have a resistance value of "R1+R4."

The switching control unit 130 and the load resistor unit 132 may constitute a first discharge unit.

The phase control unit 140 controls a connection between a positive terminal (+) and a negative terminal (-) of the battery 170 using the current detection unit 152, the main relay 164, and the fuse 166 under the control of the main control unit 120.

For example, the phase control unit 140 may include four SCRs connected to each other in the form of a bridge circuit such as a Wheatstone bridge.

A second side of the transformer 142 may be connected to an input terminal of a bridge circuit, and the switchboard 144 may be connected to a first side of the transformer 142.

The phase control unit 140, the transformer 142, and the switchboard 144 constitute a second discharge unit.

The phase control unit 140 may cause a discharge completion voltage of the battery 170 to be reduced to a reverse potential voltage using the transformer 142 and the switchboard 144.

For example, the transformer 142 outputs positive and negative alternating current (AC) voltages according to an input voltage of the switchboard 144 and transmits the positive and negative AC voltages to the input terminal of the bridge circuit of the phase control unit 140. In addition, after the phase control unit 140 becomes an on state under the control of the main control unit 120, when a voltage of the positive terminal (+) of the battery 170 is greater than a voltage of the second side of the transformer 142, the phase control unit 140 may maintain the on state in which the positive terminal (+) and the negative terminal (-) of the battery 170 are connected, and thus the voltage of the positive terminal (+) of the battery 170 may be reduced, and when the voltage of the positive terminal (+) of the battery 170 is equal to or less than the voltage of the second side of the transformer 142, the phase control unit 140 may become an off state in which the positive terminal (+) and the negative terminal (-) of the battery 170 are blocked, and thus a decrease in the voltage of the positive terminal (+) of the battery 170 may stop.

The transfer switch 150 may become the on state under the control of the main control unit 120 so that the battery 170 may be discharged by the first discharge unit including the switching control unit 130 and the load resistor unit 132, and may become the off state under the control of the main control unit 120 so that the battery 170 may be discharged by the second discharge unit including the phase control unit 140, the transformer 142, and the switchboard 144.

The reactor 160 may serve to remove harmonic components of a current and voltage of the battery 170, and the diode 162 may serve to block a reverse voltage of the battery 170.

The main relay 164 may serve to start or stop operation of the battery discharge apparatus 110, and the fuse 166 may serve to block abnormal introduction of the voltage and the current.

The battery discharge apparatus 110 may discharge the battery 170 from a discharge start voltage to a discharge completion voltage through a discharge termination voltage by the first discharge unit, may additionally discharge the battery 170 from the discharge completion voltage to a reverse potential voltage by the second discharge unit, and may short-circuit the battery 170 by the short-circuit switch 156 when the voltage is increased from the reverse potential voltage to become 0 V, which will be described with reference to the drawing.

FIGS. 3 to 5 are circuit diagrams for describing operations of the battery discharge apparatus according to the first embodiment of the present invention, and descriptions of the same parts as in FIGS. 1 and 2 will be omitted.

As illustrated in FIG. 3, when the battery discharge apparatus 110 according to the first embodiment of the present invention is operated, each of a switching control unit 130, a transfer switch 150, and a main relay 164 becomes an on state, each of a phase control unit 140 and a short-circuit switch 156 becomes an off state, and a battery 170 is discharged by a first discharge unit including the switching control unit 130 and a load resistor unit 132 so that a voltage of the battery 170 is gradually reduced from a first discharge start voltage to a discharge completion voltage through a discharge termination voltage.

For example, the discharge start voltage may be about 500 V, the discharge termination voltage may be about 250 V, and the discharge completion voltage may be about 10 V.

In this case, each of first to fourth switches s1 to s4 of the load resistor unit 132 may have an on state or an off state.

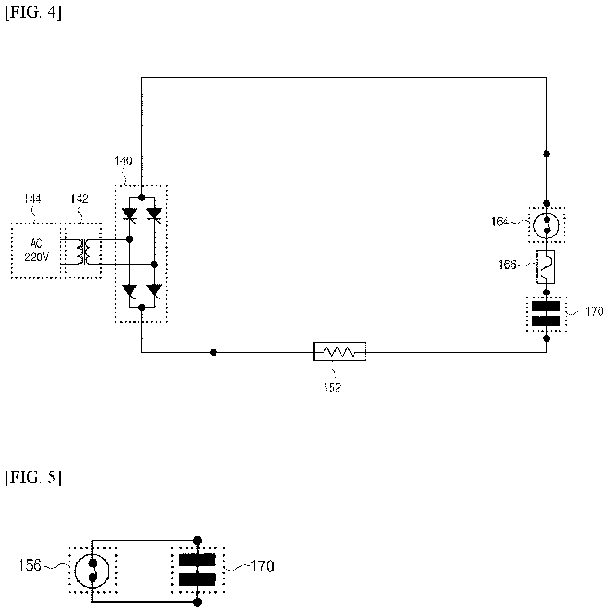

As illustrated in FIG. 4, when the voltage of the battery 170 becomes the discharge completion voltage, the switching control unit 130 and the transfer switch 150 become an off state, the phase control unit 140 becomes an on state, the main relay 164 is maintained in the on state, the short-circuit switch 156 is maintained in the off state, and the battery 170 is discharged by a second discharge unit including the phase control unit 140, the transformer 142, and the switchboard 144 so that the voltage of the battery 170 is gradually reduced from the discharge completion voltage.

Thereafter, when the voltage of the battery 170 becomes the reverse potential voltage, the switching control unit 130, the transfer switch 150, and the short-circuit switch 156 are maintained in an off state, the phase control unit 140 becomes an off state, the main relay 164 is maintained in the on state, and the voltage of the battery 170 is gradually increased from the reverse potential voltage to become 0 V.

For example, the reverse potential voltage may be a voltage having the same magnitude as the discharge completion voltage and opposite polarities, and the reverse potential voltage may be about -10 V.

As illustrated in FIG. 5, when the voltage of the battery 170 becomes 0 V, the switching control unit 130, the transfer switch 150, and the phase control unit 140 are maintained in the off state, the main relay 164 is maintained in the on state, the short-circuit switch 156 becomes the on state, and the positive terminal (+) and the negative terminal (-) of the battery 170 are short-circuited.

After the positive terminal (+) and the negative terminal (-) of the battery 170 are short-circuited by the short-circuit switch 156, the battery 170 may be separated from the battery discharge apparatus 110, a separate short-circuit unit (not illustrated) that short-circuits the positive terminal (+) and the negative terminal (-) of the battery 170 may be attached to the battery 170, and thus 0 V of the battery 170 in transfer may be maintained.

A discharging method of the battery discharge apparatus 110 according to the first embodiment of the present invention will be described with reference to the drawings.

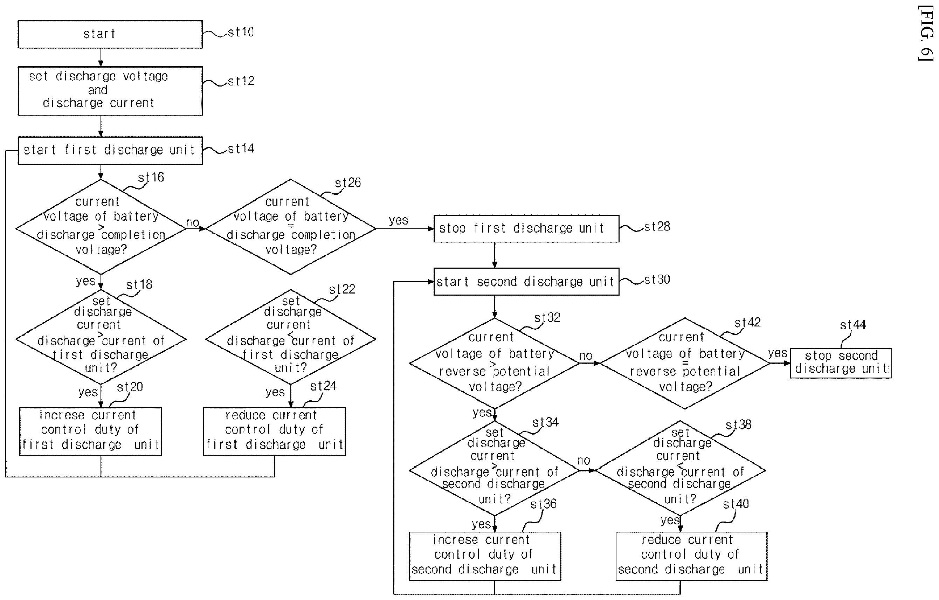

FIG. 6 is a flowchart for describing a discharging method of the battery discharge apparatus according to the first embodiment of the present invention, and descriptions thereof will be given with reference to FIGS. 1 to 5 together.

As illustrated in FIG. 6, the battery discharge apparatus 110 according to the first embodiment of the present invention starts a discharging operation (st10).

First, a discharge voltage and a discharge current are set (st12), and a discharging operation of a first discharge unit including a switching control unit 130 and a load resistor unit 132 starts (st14).

Thereafter, whether a current voltage of a battery 170 is greater than a discharge completion voltage is determined (st16).

As a result of the determination, when it is determined that the current voltage of the battery 170 is greater than the discharge completion voltage (Yes), whether the discharge current of the first discharge unit is less than the set discharge current is determined (st18).

As a result of the determination, when it is determined that the discharge current of the first discharge unit is less than the set discharge current (Yes), a current control duty of the first discharge unit is increased (st20) so that the discharge current of the first discharge unit is increased, and then the process is returned to step st14 of starting the discharging operation of the first discharge unit.

As a result of the determination, when it is determined that the discharge current of the first discharge unit is not less than the set discharge current (No), whether the discharge current of the first discharge unit is greater than the set discharge current is determined (st22).

As a result of the determination, when it is determined that the discharge current of the first discharge unit is greater than the set discharge current (Yes), the current control duty of the first discharge unit is reduced (st24) so that the discharge current of the first discharge unit is reduced, and then the process is returned to step st 14 of starting the discharging operation of the first discharge unit.

Meanwhile, as a result of determining whether the current voltage of the battery 170 is greater than the discharge completion voltage (st 16), when it is determined that the current voltage of the battery 170 is not greater than the discharge completion voltage (No), whether the current voltage of the battery 170 is equal to the discharge completion voltage is determined (st26).

As a result of the determination, when it is determined that the current voltage of the battery 170 is equal to the discharge completion voltage (Yes), the discharging operation of the first discharge unit stops (st28).

Thereafter, a discharging operation of a second discharge unit including a phase control unit 140, a transformer 142, and a switchboard 144 starts (st30).

Thereafter, whether the current voltage of the battery 170 is greater than a reverse potential voltage is determined (st32).

As a result of the determination, when it is determined that the current voltage of the battery 170 is greater than the reverse potential voltage (Yes), whether a discharge current of the second discharge unit is less than a set discharge current is determined (st34).

As a result of the determination, when it is determined that the discharge current of the second discharge unit is less than the set discharge current (Yes), a current control duty of the second discharge unit is increased (st36) so that the discharge current of the second discharge unit is increased, and then the process is returned to step st30 of starting the discharging operation of the second discharge unit.

As a result of the determination, when it is determined that the discharge current of the second discharge unit is not less than the set discharge current (No), whether the discharge current of the second discharge unit is greater than the set discharge current is determined (st38).

As a result of the determination, when it is determined that the discharge current of the second discharge unit is greater than the set discharge current (Yes), the current control duty of the second discharge unit is reduced (st40) so that the discharge current of the second discharge unit is reduced, and then the process is returned to step st30 of starting the discharging operation of the second discharge unit.

Meanwhile, as a result of determining whether the current voltage of the battery 170 is greater than the reverse potential voltage (st32), when it is determined that the current voltage of the battery 170 is not greater than the reverse potential voltage (No), whether the current voltage of the battery 170 is equal to the reverse potential voltage is determined (st42).

As a result of the determination, when it is determined that the current voltage of the battery 170 is equal to the reverse potential voltage (Yes), the discharging operation of the second discharge unit stops (st44).

As described above, in the battery discharge apparatus 110 according to the first embodiment of the present invention, the battery 170 may be discharged from the discharge start voltage to the discharge completion voltage through the discharge termination voltage by the first discharge unit including the switching control unit 130 and the load resistor unit 132, the battery 170 may be additionally discharged from the discharge completion voltage to the reverse potential voltage by the second discharge unit including the phase control unit 140, the transformer 142, and the switchboard 144, and the battery 170 may be short-circuited by the short-circuit switch 156 when the voltage is increased from the reverse potential voltage to become 0 V.

Accordingly, all electric charges charged in the battery 170 can be safely removed by the first and second discharge units, and the battery 170 can be completely discharged to 0 V.

Further, convenience of use can be improved due to the short-circuit switch 156.

However, in the battery discharge apparatus 110 according to the first embodiment of the present invention, before the discharging operation of the second discharge unit starts after the discharging operation to the discharge completion voltage of the first discharge unit is completed the first discharge unit stops (st28), and in this case, as the load is separated from the battery 170, the voltage of the battery 170 may be increased by a certain amount from the discharge completion voltage to become a recovery voltage.

Here, when the recovery voltage of the battery 170 is greater than a voltage of a second side of the transformer 142 of the second discharge unit, the discharging operation of the second discharge unit may not start.

In order to improve this, an overlapping range of the discharge completion voltage of the first discharge unit and the voltage of the second side of the transformer 142 of the second discharge unit may be increased so that the second discharge unit may accommodate the recovery voltage of the battery 170. However, it is difficult to predict the recovery voltage according to characteristics such as a capacity of the battery 170 and the like, and as the overlapping range of the operating voltages of the first and second discharge units is increased, a capacity of the transformer 142 of the second discharge unit may be increased, resulting in an increase in manufacturing costs.

In another embodiment, when switching from the operation of the first discharge unit to the operation of the second discharge unit, it is possible to operate the first and second discharge units together without stopping discharging operations thereof, which will be described with reference to the drawing.

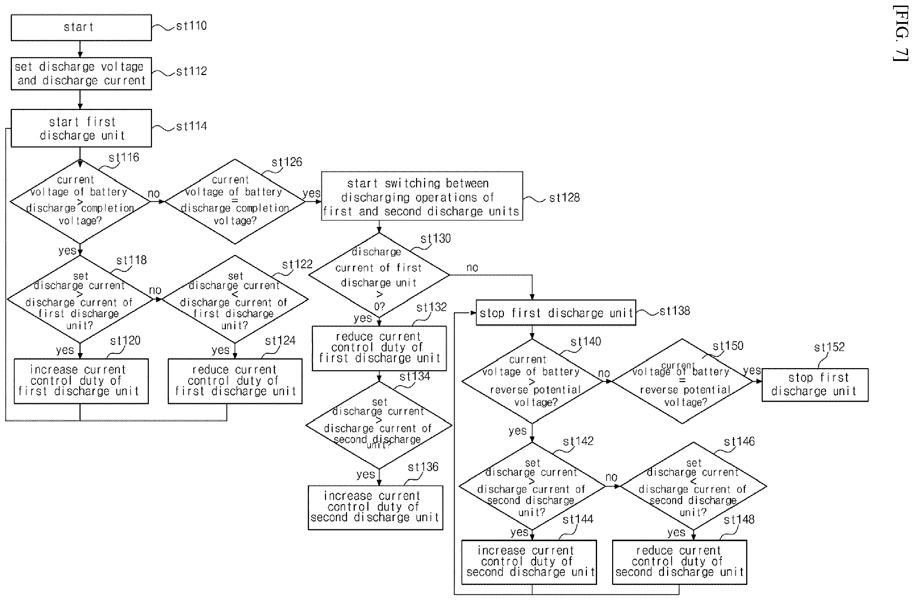

FIG. 7 is a flowchart for describing a discharging method of a battery discharge apparatus according to a second embodiment of the present invention, and since a configuration of the battery discharge apparatus is the same as that of the first embodiment, descriptions thereof will be given with reference to FIGS. 1 to 5 together.

As illustrated in FIG. 7, a battery discharge apparatus 110 according to the second embodiment of the present invention starts a discharging operation (st110).

First, a discharge voltage and a discharge current are set (st 112), and a discharging operation of a first discharge unit including a switching control unit 130 and a load resistor unit 132 starts (st114).

Thereafter, whether a current voltage of the battery 170 is greater than a discharge completion voltage is determined (st116).

As a result of the determination, when it is determined that the current voltage of the battery 170 is greater than the discharge completion voltage (Yes), whether the discharge current of the first discharge unit is less than the set discharge current is determined (st118).

As a result of the determination, when it is determined that the discharge current of the first discharge unit is less than the set discharge current (Yes), a current control duty of the first discharge unit is increased (st120) so that the discharge current of the first discharge unit is increased, and then the process is returned to step st114 of starting the discharging operation of the first discharge unit.

As a result of the determination, when it is determined that the discharge current of the first discharge unit is not less than the set discharge current (No), whether the discharge current of the first discharge unit is greater than the set discharge current is determined (st122).

As a result of the determination, when it is determined that the discharge current of the first discharge unit is greater than the set discharge current (Yes), the current control duty of the first discharge unit is reduced (st 124) so that the discharge current of the first discharge unit is reduced, and then the process is returned to step st114 of starting the discharging operation of the first discharge unit.

Meanwhile, as a result of determining whether the current voltage of the battery 170 is greater than the discharge completion voltage (st116), when it is determined that the current voltage of the battery 170 is not greater than the discharge completion voltage (No), whether the current voltage of the battery 170 is equal to the discharge completion voltage is determined (st126).

As a result of the determination, when it is determined that the current voltage of the battery 170 is equal to the discharge completion voltage (Yes), switching between the discharging operations of the first and second discharge units starts (st128).

Thereafter, whether the discharge current of the first discharge unit is greater than 0 is determined (st130).

As a result of the determination, when it is determined that the discharge current of the first discharge unit is greater than 0 (Yes), the current control duty of the first discharge unit is reduced (st132) so that the discharge current of the first discharge unit is reduced.

Thereafter, whether the discharge current of the second discharge unit is less than the set discharge current is determined (st134).

As a result of the determination, when it is determined that the discharge current of the second discharge unit is less than the set discharge current (Yes), the current control duty of the second discharge unit is increased (st136) so that the discharge current of the second discharge unit is increased.

Meanwhile, as a result of determining whether the discharge current of the first discharge unit is greater than 0 (st130), when it is determined that the discharge current of the first discharge unit is not greater than 0 (No), the discharging operation of the first discharge unit stops (st 138).

Thereafter, whether the current voltage of the battery 170 is greater than a reverse potential voltage is determined (st140).

As a result of the determination, when it is determined that the current voltage of the battery 170 is greater than the reverse potential voltage (Yes), whether the discharge current of the second discharge unit is less than the set discharge current is determined (st142).

As a result of the determination, when it is determined that the discharge current of the second discharge unit is less than the set discharge current (Yes), the current control duty of the second discharge unit is increased (st144) so that the discharge current of the second discharge unit is increased, and then the process is returned to step st138 of stopping the discharging operation of the first discharge unit.

As a result of the determination, when it is determined that the discharge current of the second discharge unit is not less than the set discharge current (No), whether the discharge current of the second discharge unit is greater than the set discharge current is determined (st146).

As a result of the determination, when it is determined that the discharge current of the second discharge unit is greater than the set discharge current (Yes), the current control duty of the second discharge unit is reduced (st148) so that the discharge current of the second discharge unit is reduced, and then the process is returned to step st138 of stopping the discharging operation of the first discharge unit.

Meanwhile, as a result of determining whether the current voltage of the battery 170 is greater than the reverse potential voltage (st140), when it is determined that the current voltage of the battery 170 is not greater than the reverse potential voltage (No), whether the current voltage of the battery 170 is equal to the reverse potential voltage is determined (st150).

As a result of the determination, when it is determined that the current voltage of the battery 170 is equal to the reverse potential voltage (Yes), the discharging operation of the second discharge unit stops (st152).

As described above, in the battery discharge apparatus 110 according to the second embodiment of the present invention, the battery 170 may be discharged from the discharge start voltage to the discharge completion voltage through the discharge termination voltage by the first discharge unit including the switching control unit 130 and the load resistor unit 132, the battery 170 may be additionally discharged from the discharge completion voltage to the reverse potential voltage by the second discharge unit including the phase control unit 140, the transformer 142, and the switchboard 144, and the battery 170 may be short-circuited by the short-circuit switch 156 when the voltage is increased from the reverse potential voltage to become 0 V.

Accordingly, all electric charges charged in the battery 170 can be safely removed by the first and second discharge units, and the battery 170 can be completely discharged to 0 V.

Further, convenience of use can be improved due to the short-circuit switch 156.

In addition, instead of stopping the first discharge unit when the discharging operation of the first discharge unit is completed, by operating the first and second discharge units together and by stopping the discharging operation of the first discharge unit after the discharging operation of the second discharge unit starts, it is possible to perform switching between the discharging operations of the first and second discharge units smoothly and reduce manufacturing costs.

While the example embodiments of the present invention and their advantages have been described above in detail, it should be understood by those skilled in the art that various changes, substitutions and alterations may be made herein without departing from the scope of the invention as defined by the following claims.

## Claims

1. A battery discharge apparatus comprising:
a main control unit;
a first discharge unit configured to discharge a battery from a discharge start voltage to a discharge completion voltage under control of the main control unit;
a second discharge unit configured to discharge the battery from the discharge completion voltage to a reverse potential voltage under the control of the main control unit; and
a short-circuit switch configured to short-circuit the battery under the control of the main control unit when a voltage of the battery is increased from the reverse potential voltage to become 0 V.

2. The battery discharge apparatus of claim 1, wherein the first discharge unit includes:
a switching control unit connected to the battery; and
a load resistor unit which is disposed to connect the switching control unit and the battery to provide different resistance values.

3. The battery discharge apparatus of claim 2, wherein the switching control unit includes at least one insulated gate bipolar transistor (IGBT).

4. The battery discharge apparatus of claim 2, wherein the load resistor unit includes a plurality of resistors having different resistance values and a plurality of switches each connected to both ends of at least corresponding one of the plurality of resistors.

5. The battery discharge apparatus of claim 1, wherein the second discharge unit includes:
a phase control unit connected to the battery;
a transformer having a second side connected to the phase control unit; and
a switchboard connected to a first side of the transformer.

6. The battery discharge apparatus of claim 5, wherein the phase control unit includes at least one silicon-controlled rectifier (SCR).

7. The battery discharge apparatus of claim 6, wherein the at least one SCR includes four SCRs connected to each other in a form of a bridge circuit.

8. A method of discharging a battery, comprising:
discharging, by a first discharge unit, a battery from a discharge start voltage to a discharge completion voltage;
discharging, by a second discharge unit, the battery from the discharge completion voltage to a reverse potential voltage; and
short-circuiting, by a short-circuit switch, the battery when a voltage of the battery is increased from the reverse potential voltage to become 0 V.

9. The method of claim 8, wherein the discharging, by the first discharge unit, of the battery includes:
causing a switching control unit of the first discharge unit to have an on state and causing a phase control unit of the second discharge unit to have an off state; and
providing, by a load resistor unit of the first discharge unit, different resistance values, and
the discharging, by the second discharge unit, of the battery includes:
causing the switching control unit of the first discharge unit to have the off state and causing the phase control unit of the second discharge unit to have the on state; and
causing the phase control unit of the second discharge unit to have the off state when the battery becomes the reverse potential voltage.

10. The method of claim 8, further comprising, between the discharging, by the first discharge unit, of the battery and the discharging, by the second discharge unit, of the battery:
operating the first and second discharge units together; and
stopping the first discharge unit.
